# EUROPÄISCHE PATENTSCHRIFT

(11) **EP 1 281 592 B1**
(45) Veröffentlichungstag und Bekanntmachung des Hinweises auf die Patenterteilung: **27.04.2005**
(21) Anmeldenummer: 02016449.7
(22) Anmeldetag: 23.07.2002
(51) Int. Cl.: B60T 13/12, B60T 7/20, B60T 13/68, B60T 15/60, B60T 11/10

(54) **Hydraulische Anhängerbremsanlage**
Hydraulic trailer brake system
Système de freinage hydraulique pour remorque

(30) Priorität: 04.08.2001 DE 10138391
(43) Veröffentlichungstag der Anmeldung: 05.02.2003
(73) Patentinhaber: ROBERT BOSCH GMBH, 70442 Stuttgart (DE)
(72) Erfinder: Trucksess, Rainer, 71665 Vaihingen (DE); Lödige, Heinrich, 71655 Vaihingen (DE)
(74) Vertreter: Thürer, Andreas

(56) Entgegenhaltungen:
- DE-A- 4 134 920
- DE-A- 4 327 759
- US-A- 3 837 361
- US-A- 4 099 790

## Beschreibung

### Stand der Technik

Die Erfindung geht aus von einer hydraulischen Anhängerbremsanlage nach der im Oberbegriff des Anspruchs 1 näher angegebenen Gattung.

Es ist schon eine solche hydraulische Anhängerbremsanlage aus der DE 41 34 920 A 1 bekannt, bei der die Verbindungen zwischen Anhängerbremszylinder und Druckspeicher sowie zwischen Anhängerbremszylinder und Anhängerbremsleitung durch drei 2/2-Magnetventile steuerbar ist, wobei deren Elektromagnete in einen elektrischen Stromkreis geschaltet sind, in dem auch ein vom Druck des Druckspeichers gesteuerter Schalter liegt, so dass mit dieser Anhängerbremsanlage neben der normalen Betriebsbremse die Funktionen einer Handbremse, einer Abreißbremse und einer Feststellbremse ausführbar sind. Um einen abgestellten Anhänger an ein Zugfahrzeug hydraulisch anzukuppeln, muss u. U. ein durch Lecköl über ein Magnetventil vor der hydraulischen Kupplung herrschender Druck abgebaut werden, wozu eine Handpumpe auf dem Anhänger vorgesehen ist, um die Kupplung zu entlasten und ein Ankuppeln ohne Druck zu ermöglichen. Von Nachteil ist nun, dass bei dieser Anhängerbremsanlage ein abgestellter Anhänger ohne Anschluss an das Hydrauliknetz des Zugfahrzeugs nicht rangiert oder abgeschleppt werden kann, wie dies in vielen Fällen erwünscht ist. Auch baut die Anhängerbremsanlage mit drei Magnetventilen relativ aufwendig. Zudem kann auch das zwischen Anhängerbremsleitung und Anhängerbremszylinder liegende Magnetventil durch seine Baugröße bewirken, dass der Durchflusswiderstand für den Druckmittelstrom sowie die Füllzeit des Bremszylinders und somit auch ein schneller Druckaufbau im Bremszylinder nachteilig beeinflusst werden können.

### Vorteile der Erfindung

Die erfindungsgemäße hydraulische Anhängerbremsanlage mit den kennzeichnenden Merkmalen des Hauptanspruchs hat demgegenüber den Vorteil, dass neben den bisherigen Funktionen, wie Betriebsbremse, Handbremse und Abreißbremse, der abgestellte Anhänger bei Bedarf auch ohne Anschluss an das Hydrauliknetz des Zugfahrzeugs rangiert oder abgeschleppt werden kann, so dass die Einsatzfähigkeit der Anhängerbremsanlage wesentlich erhöht wird. Dabei ist es in vorteilhafter Weise möglich, mit Hilfe der in der Anhängerbremsanlage angeordneten Handpumpe den Anhängerbremszylinder zu entlasten und damit die Bremse zu lösen. Die Anhängerbremsanlage lässt sich relativ einfach und kostengünstig realisieren, wobei Bauelemente bereits vorhandener Anlagen in zweckmäßiger Weise weiter verwendbar sind.

Durch die in den Unteransprüchen aufgeführten Maßnahmen sind vorteilhafte Weiterbildungen und Verbesserungen der im Hauptanspruch angegebenen Anhängerbremsanlage möglich. Besonders vorteilhaft ist es, wenn bei der Anhängerbremsanlage die elektrische Verschaltung gemäß Anspruch 2 ausgeführt wird, um auf diese Weise sicherzustellen, dass das zwischen Bremszylinder und Anhängerbremsleitung liegende zweite Magnetventil erst geschaltet werden kann, wenn die Handnotbetätigungseinrichtung wieder entrastet ist, so dass der Anhänger nach dem Rangieren sicher gebremst ist. Fernerhin ist es zweckmäßig, wenn in der Anhängerbremsanlage gemäß Anspruch 3 eine Bypass-Leitung vorgesehen wird, wodurch der Durchflusswiderstand für den Druckmittelstrom zum Bremszylinder und somit auch dessen Füllzeit reduziert werden kann, wobei dies auf einfache und raumsparende Weise möglich ist.

Ferner ergibt sich gemäß Anspruch 4 eine vorteilhafte Bauweise der Anhängerbremsanlage, die zu einer kostengünstigen, kompakt und leicht bauenden Lösung führt, mit der alle Funktionen einer Anhängerbremsanlage durchführbar sind, einschließlich dem Rangieren ohne Anschluss an ein Zugfahrzeug. Weitere vorteilhafte Ausgestaltungen ergeben sich aus den übrigen Ansprüchen, der Beschreibung sowie der Zeichnung.

### Zeichnung

Zwei Ausführungsbeispiele der Erfindung sind in der Zeichnung dargestellt und in der nachfolgenden Beschreibung näher erläutert. Es zeigen
- Figur 1: ein erstes Ausführungsbeispiel einer hydraulischen Anhängerbremsanlage in schematischer Darstellung,
- Figur 2: einen Längsschnitt durch einen Steuerblock der hydraulischen Anhängerbremsanlage nach Figur 1 und
- Figur 3: ein zweites Ausführungsbeispiel einer AnhängerBremsanlage in schematischer Darstellung.

### Beschreibung der Ausführungsbeispiele

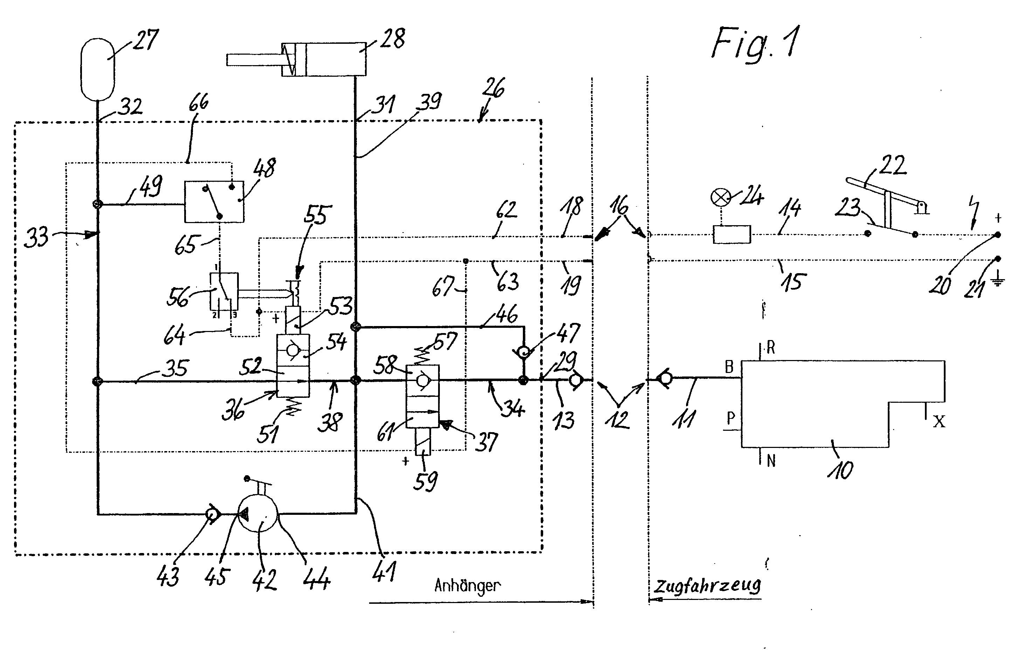

In Figur 1 ist mit 10 ein an sich bekanntes hydraulisches Bremsventil bezeichnet, das auf bzw. an einem Zugfahrzeug befestigt ist. Von diesem Bremsventil 10 geht eine hydraulische Bremsleitung 11 zu einer Kupplung 12, an die eine Anhängerbremsleitung 13 angekuppelt ist. Vom Zugfahrzeug geht weiterhin eine zweiadrige, elektrische Bremsleitung 14,15 aus, die zu einer Elektrokupplung 16 führt. An diese Elektrokupplung 16 sind die zwei Adern 18,19 der elektrischen Anhängerbremsleitung angekuppelt.

Die elektrische Bremsleitung 14,15 ist mit einer Spannungsquelle des Zugfahrzeugs, bspw. der Batterie verbunden, wobei die eine Ader 14 der Bremsleitung mit dem Pluspol 20 und die andere Ader 15 mit dem Minuspol bzw. der Fahrzeugmasse 21 verbunden ist. In die Ader 14 der zugfahrzeugseitigen elektrischen Bremsleitung ist ein mit einer Handbremse 22 verbundener Schalter 23 eingesetzt, der sich bei betätigter, also angezogener Handbremse 22 in geöffnetem Zustand befindet. Darüber hinaus ist noch eine Kontrolleuchte 24 vorgesehen, die den Betätigungszustand der Handbremse 22 anzeigt.

Sowohl die hydraulische Anhängerbremsleitung 13 als auch die elektrische Anhängerbremsleitung 18,19 führen zu einem Steuerblock 26, der mit einem Druckspeicher 27 und einem Anhängerbremszylinder 28 verbunden ist.

Wie die Figur 1 näher zeigt, weist der Steuerblock 26 zu diesem Zweck einen mit der Bremsleitung 13 verbundenen Bremsventilanschluss 29, einen mit dem Bremszylinder 28 verbundenen Zylinderanschluss 31 sowie einen mit dem Druckspeicher 27 verbundenen Speicheranschluss 32 auf. Diese drei Anschlüsse 29,31,32 stehen über eine Leitungsverbindung 33 miteinander in Verbindung, wovon eine Hauptleitung 34 von dem Bremsventilanschluss 29 zum Zylinderanschluss 31 führt, während eine Druckleitung 35 den Speicheranschluss 32 mit dem Zylinderanschluss 31 verbindet, wobei sich Hauptleitung und Druckleitung teilweise überlappen. Zur Steuerung der Verbindung zwischen dem Druckspeicher 27 und dem Bremszylinder 28 ist in die Druckleitung 35 ein erstes 2/2-Magnetventil 36 geschaltet, während zur Steuerung der Verbindung zwischen Bremsventilanschluss 29 und Bremszylinder 28 in die Hauptleitung 34 ein zweites 2/2-Magnetventil 37 geschaltet ist. Auf diese Weise erstreckt sich zwischen den beiden Magnetventilen 36,37 ein Leitungsabschnitt 38, von dem aus ein gemeinsamer Leitungsabschnitt 39 von Hauptleitung 34 und Druckleitung 35 zum Bremszylinder 28 führt. In dem Steuerblock 26 ist ferner parallel zum ersten Magnetventil 36 eine Umgehungsleitung 41 geführt, in die eine Handpumpe 42 und ein Rückschlagventil 43 geschaltet sind. Diese Umgehungsleitung 41 zweigt von dem Leitungsabschnitt 38 ab und führt zur Saugseite 44 der Handpumpe 42, während die Druckseite 45 über das zum Druckspeicher 27 hin öffnende Rückschlagventil 43 mit dem Speicheranschluss 32 Verbindung hat.

Ferner ist in dem Steuerblock 26 eine das zweite Magnetventil 37 umgehende Bypass-Leitung 46 angeordnet, welche vom Bremsventilanschluss 29 zum gemeinsamen Leitungsabschnitt 39 führt. In dieser Bypass-Leitung 46 ist ein zum Bremszylinder 28 hin öffnendes Rückschlagventil 47 angeordnet.

In dem Steuerblock 26 ist ferner als zweiter elektrischer Schalter ein elektrohydraulischer Druckschalter 48 vorgesehen, der über einen Druckabgriff 49 vom Druck des Druckspeichers 27 beaufschlagt wird.

Das erste Magnetventil 36 ist als Wegeventil für zwei Stellungen und zwei Anschlüsse ausgebildet, das von einer Feder 51 in einer Ausgangsstellung 52 gehalten wird, in der es einen Durchlass zwischen den beiden Anschlüssen öffnet. Von einem Elektromagneten 53 ist es gegen die Kraft der Feder 51 in eine Arbeitsstellung 54 verstellbar, in der es als Rückschlagventil arbeitet, das einen Durchfluss zum Druckspeicher 27 hin erlaubt, eine Durchströmung in Gegenrichtung aber absperrt. Diesem Elektromagnet 53 des ersten Magnetventils 36 ist eine Handnotbetätigungseinrichtung 55 zugeordnet, die mit einem elektromechanischen, dritten Schalter 56 zusammenarbeitet.

Das zweite Magnetventil 37 ist ebenfalls als Wegeventil mit zwei Stellungen und zwei Anschlüssen ausgebildet und wird von einer Feder 57 in einer Ausgangsstellung 58 gehalten, in der es als Rückschlagventil wirkt. In dieser Ausgangsstellung 58 lässt das Rückschlagventil eine Strömung vom Bremsventilanschluss 29 zum Bremszylinder 28 zu, sperrt aber die Gegenrichtung. Das zweite Magnetventil 37 ist durch einen Elektromagneten 59 in eine Arbeitsstellung 61 auslenkbar, in der es einen Durchlass zwischen beiden Anschlüssen herstellt.

Die beiden Magnetventile 36,37 sind mit ihren Elektromagneten 53 bzw. 59 parallel zueinander an die elektrische Bremsleitung 14,15 angeschlossen. Zu diesem Zweck steht der Elektromagnet 53 über eine erste Anschlussleitung 62 mit der Ader 18 und über eine zweite Anschlussleitung 63 mit der Ader 19 in Verbindung. Ferner führt von der ersten Anschlussleitung 62 eine dritte Anschlussleitung 64 zum dritten Schalter 56, der über eine vierte Anschlussleitung 65 mit dem Druckschalter 48 Verbindung hat; vom Druckschalter 48 führt eine fünfte Anschlussleitung 66 zum Elektromagnet 59 des zweiten Magnetventils, das über eine sechste Anschlussleitung 67 mit der Ader 19 Verbindung hat.

Die Wirkungsweise der hydraulischen Anhängerbremsanlage wird wie folgt erläutert:

Es sei von dem in Figur 1 dargestellten Zustand ausgegangen, wobei bei angezogener Handbremse 22 der Anhänger vom Zugfahrzeug getrennt ist, so dass die hydraulische Kupplung 12 wie auch die Elektrokupplung 16 gelöst sind. Die Elektromagneten 53 und 59 der beiden Magnetventile 36 und 37 auf dem Anhänger sind stromlos. Das erste Magnetventil 36 wird von der Feder 51 in der Ausgangsstellung 52 gehalten, wodurch bei aufgesteuerter Verbindung der Druckspeicher 27 über die Druckleitung 35 Verbindung mit dem Bremszylinder 28 hat. Somit sorgt der im Druckspeicher 27 vorhandene Druck dafür, dass die Bremsen des Anhängers betätigt sind. Das zweite Magnetventil 37 wird dabei von der Feder 57 in der Ausgangsstellung 58 gehalten, in der es als Rückschlagventil arbeitet und den Bremszylinder 28 absperrt. Ebenso wird der Bremszylinder 28 durch das in der Bypass-Leitung 46 liegende Rückschlagventil 47 abgesichert. Der vom Zugfahrzeug getrennte und somit abgestellte Anhänger wird auf diese Weise von einer Feststellbremse sicher gebremst.

Soll nun der abgestellte Anhänger manövrierbar gemacht werden, wobei der Anhänger nicht über die hydraulische Kupplung 12 an das Hydrauliknetz des Zugfahrzeugs angeschlossen werden kann, so wird das erste Magnetventil 36 mit Hilfe der Handnotbetätigungseinrichtung 55 betätigt. Solche Umstände können auftreten beim Abschleppen des Anhängers oder wenn der Anhänger zum Rangieren an die Front eines Traktors angehängt wird. Bei einem solchen abgestellten Anhänger muss i.d.R. davon ausgegangen werden, dass durch Leckage über das zweite Magnetventil 37 die Anhängerbremsleitung 13 bis zur hydraulischen Kupplung 12 hin unter Druck gesetzt ist. Da ein Ankoppeln unter Druck i.d.R. nicht möglich ist, kann nun mit Hilfe der Handpumpe 42 diese Bremsleitung 13 und vor allem der Bremszylinder 28 entlastet werden. Beim Betätigen des ersten Magnetventils 36 durch die Handnotbetätigungseinrichtung 55 wird dieses in seine Arbeitsstellung 54 verstellt, wodurch dessen Rückschlagventilfunktion einen Druckmittelfluss vom Druckspeicher 27 in Richtung des Bremszylinders 28 verhindert. Durch Betätigen der Handpumpe 42 kann nun Druckmittel vom Bremszylinder 28 über die Umgehungsleitung 41 zum Druckspeicher 27 hin gepumpt werden, so dass der Bremszylinder 28 drucklos und somit die Bremse gelöst wird. Über das Rückschlagventil 47 in der Bypass-Leitung 46 bzw. über die Rückschlagventilfunktion 58 des zweiten Magnetventils 37 wird auch die hydraulische Kupplung 13 entlastet. Der Anhänger ist damit manövrierbar und lässt sich am Zugfahrzeug ankoppeln, wobei auch die hydraulische Kupplung 12 und die Elektrokupplung 16 miteinander verbunden werden. Wenn die Handnotbetätigungseinrichtung 55 am ersten Magnetventil 36 aktiviert ist, wird zugleich auch der mit ihr gekoppelte elektromechanische dritte Schalter 56 betätigt, wodurch dieser die Verbindung zwischen der dritten Anschlussleitung 64 und der fünften Anschlussleitung 65 unterbricht. Auf diese Weise wird sichergestellt, dass bei betätigter Handnotbetätigungseinrichtung 55 das zweite Magnetventil 37 nicht geschaltet werden kann. Wird anschließend die Handnotbetätigungseinrichtung wieder gelöst, so schaltet das erste Magnetventil 36 in seine Durchgangsstellung 52, wodurch eine Verbindung vom Druckspeicher 27 zum Bremszylinder 28 entsteht und somit der Anhänger gebremst ist.

Es sei nun davon ausgegangen, dass der Anhänger am Zugfahrzeug angehängt ist und die Kupplungen 12 und 16 geschlossen sind, wobei nun die Handbremse 22 auf dem Zugfahrzeug gelöst wird und dadurch der erste Schalter 23 den Stromkreis schließt. Ferner wird davon ausgegangen, dass der Druck im Druckspeicher 27 unter dem gewünschten Ladedruck von z.B. 120 bar liegt, so dass der Druckschalter 48 die gezeichnete, gesperrte Stellung einnimmt und auf dem Zugfahrzeug die Kontrolleuchte 24 aufleuchtet. Durch den vom ersten Schalter 23 geschlossenen Stromkreis wird zwar der Elektromagnet 53 des ersten Magnetventils 36 erregt und in seine Arbeitsstellung 54 gesteuert so dass dessen Rückschlagventilfunktion die Druckleitung 35 in Richtung zum Bremszylinder 28 hin sperrt. Infolge der Sperrstellung des Druckschalters 48 bleibt aber das zweite Magnetventil 37 stromlos, wodurch dessen wirksame Rückschlagventilfunktion einen Abbau des Druckes im Bremszylinder 28 verhindert. Der Anhänger ist somit immer noch gebremst und noch nicht fahrbereit. Der Fahrer des Zugfahrzeugs kann anschließend durch Betätigen der Fußbremse und damit des Bremsventils 10 einen ausreichend hohen Druck erzeugen, der über die hydraulische Kupplung 12, einen Abschnitt der Hauptleitung 34 mit dem zweiten Magnetventil 37 und über das geschaltete erste Magnetventil 36 den Druckspeicher 27 auflädt. Ist schließlich der Druckspeicher 27 geladen, so schaltet der Druckschalter 48 in seine Durchgangsstellung und verbindet die vierte Anschlussleitung 65 mit der fünften Anschlussleitung 66, so dass auch der Elektromagnet 59 am zweiten Magnetventil 37 Strom erhält, und das Ventil schaltet in seine Durchgangsstellung 61. Der im Bremszylinder 28 vorhandene Druck kann nun über die Hauptleitung 34 und das geöffnete zweite Magnetventil 37 sowie die Hydrokupplung 12 zum Bremsventil 10 hin abgebaut werden, wo das Druckmittel in den Rücklauf gesteuert wird. Bei gelöstem Bremszylinder 28 sind nun beide Magnetventile 36 und 37 geschaltet und dabei der Anhänger fahrbereit, so dass anschließend der aus Zugfahrzeug und Anhänger bestehende Zug in an sich bekannter Weise vom Fahrer auf dem Zugfahrzeug mit Hilfe der Fußbremse gebremst werden kann, wobei das Bremsventil 10 für die normale Betriebsbremse den Druckaufbau und den Druckabbau im Bremszylinder 28 des Anhängers mit steuert.

Sollte bei dem fahrenden Zug der Anhänger vom Zugfahrzeug abreißen, so wird neben der hydraulischen Kupplung 12 auch die Elektrokupplung 16 getrennt. Beide Magnetventile 36,37 auf dem Anhänger werden stromlos und von ihren Federn 51 bzw. 57 in ihre Ausgangsstellungen 52 bzw. 58 gedrückt. Damit wird der Druckspeicher 27 über das erste Magnetventil 36 mit dem Bremszylinder 28 verbunden, während das zweite Magnetventil 37 die Verbindung zur Hydrokupplung 12 sperrt. Die Bremsen auf dem Anhänger werden somit betätigt (Abreißbremse).

Durch den beschriebenen Aufbau der Anhängerbremsanlage ist gewährleistet, dass die Anhängerbremse 28 erst gelöst werden kann, wenn der Druckspeicher 27 mit dem vorgeschriebenen Druck aufgeladen ist, so dass die Handbrems- und Abreißbremsfunktionen sichergestellt sind. Bei angekuppeltem Anhänger und aufgeladenem Druckspeicher bleiben die Hand- und Abreißbremsfunktionen ohne Einfluss auf das Verhalten der Betriebsbremse.

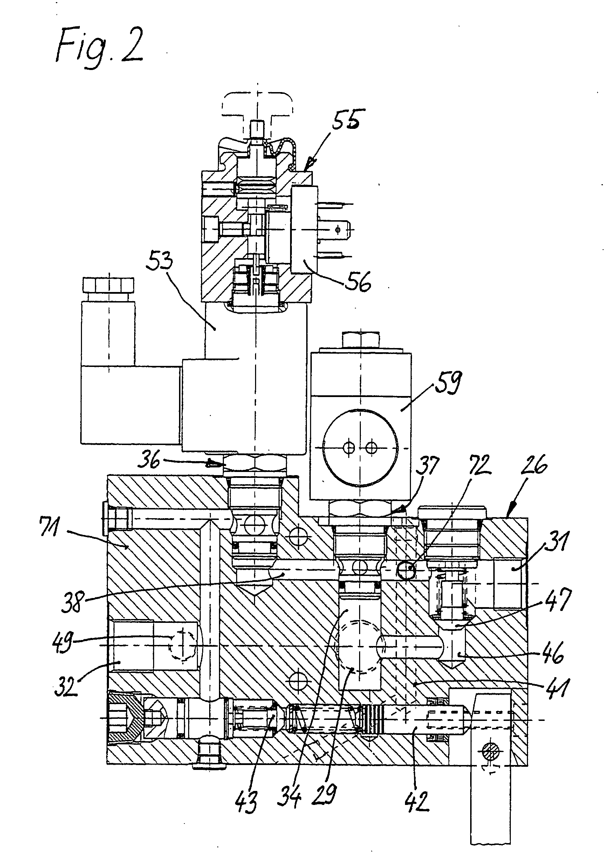

Die Figur 2 zeigt den in Figur 1 mehr schematisch dargestellten Steuerblock 26 nun in einer mehr konstruktiven Ausführungsform, wobei der im Längsschnitt dargestellte Steuerblock ein Gehäuse 71 aufweist, an dem der Bremsventilanschluss 29, der Zylinderanschluss 31 sowie der Speicheranschluss 32 angeordnet sind und der in seinem Inneren die Handpumpe 42 aufnimmt. Die beiden Magnetventile 36,37 sind als Patronenventile ausgeführt, die in das Gehäuse 71 eingeschraubt sind. An dem Elektromagnet 53 des ersten Magnetventils 36 ist in axialer Richtung die Handnotbetätigungseinrichtung 55 angebaut, in die zusätzlich der dritte Schalter 56 integriert ist. Im Gehäuse 71 ist deutlich die vom Bremsventilanschluss 29 zum Zylinderanschluss 31 über das zweite Magnetventil 37 führende Hauptleitung 34 erkennbar, zu der die Bypass-Leitung 46 mit dem Rückschlagventil 47 parallel geführt ist. Ferner ist im Gehäuse 71 der zwischen den beiden Magnetventilen 36,37 verlaufende Leitungsabschnitt 38 erkennbar, von dem an der Öffnung 72 die Umgehungsleitung 41 abgeht, in welche die Handpumpe 42 mit Rückschlagventil 43 geschaltet ist.

In dem Gehäuse 71 lassen sich bei einer Ausbildung der Magnetventile 36,37 als Patronenventile die hydraulischen Schaltverbindungen des Steuerblocks 26 nach Figur 1 in besonders vorteilhafter, einfacher und kompakter Weise realisieren.

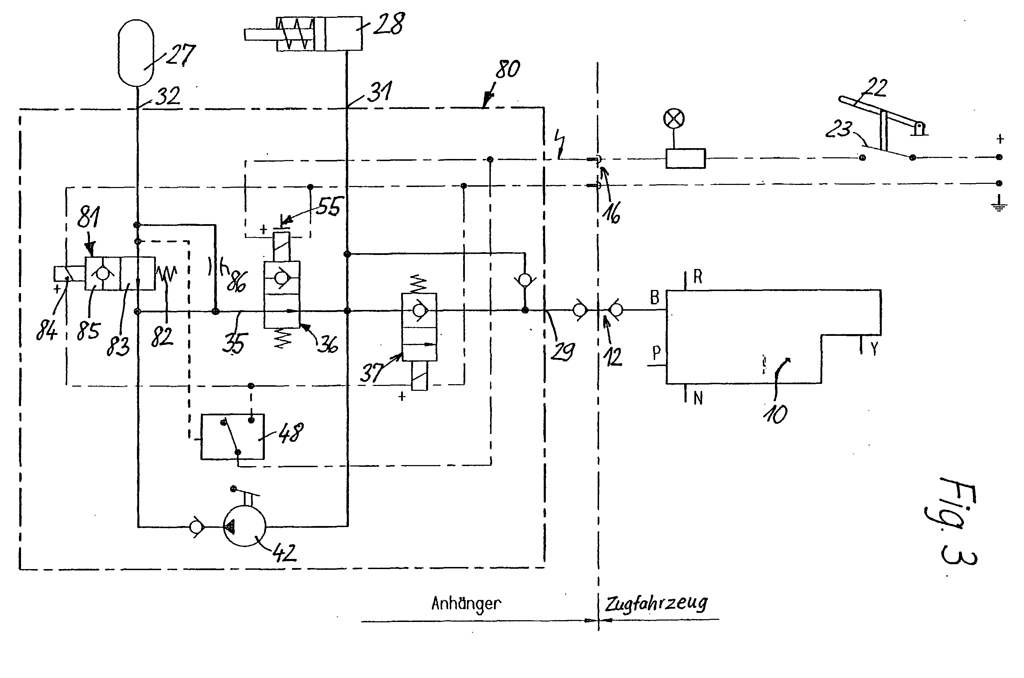

Die Figur 3 zeigt eine zweite Ausführungsform einer hydraulischen Anhängerbremsanlage in schematischer Darstellung, die sich von derjenigen nach Figur 1 vor allem durch einen anderen Steuerblock 80 unterscheidet, bei dem in die Druckleitung 35 zwischen dem Druckspeicher 27 und dem ersten Magnetventil 36 ein drittes 2/2-Magnetventil 81 geschaltet ist. Dieses dritte Magnetventil 81 wird von einer Feder 82 in einer Ausgangsstellung 83 gehalten, in der es einen Durchlass zwischen seinen beiden Anschlüssen herstellt. Von einem in den Stromkreis geschalteten Elektromagneten 84 ist es in eine Arbeitsstellung 85 auslenkbar, in der es als Rückschlagventil arbeitet, das den Druckmittelstrom zum Druckspeicher 27 sperrt. Mit Hilfe dieses dritten Magnetventils 81 lässt sich erreichen, dass bei einem Ansprechen der Betriebsbremse dieses Ventil seine Arbeitsstellung 85 einnimmt und dadurch ein paralleles Füllen des Bremszylinders 28 und des Druckspeichers 27 verhindert wird; auf diese Weise läßt sich ein schnelleres Ansprechen der Betriebsbremse erreichen.

In einer weiteren Ergänzung kann das dritte Magnetventil 81 durch eine Drossel 86 umgangen werden. Sollte sich der Druckspeicher 27 durch Undichtheiten während der Fahrt entladen, so kann der Speicher über diese Drossel 86 während einer Bremsung langsam wieder aufgeladen werden. Der Querschnitt der Drossel 86 wird so gewählt, dass der Bremsvorgang bzw. der Füllvorgang für den Bremszylinder 28 nicht behindert werden.

## Patentansprüche

1. Hydraulisch Anhängerbremsanlage, bei der mindestens ein Bremszylinder (28) über eine Anhängerbremsleitung (13) von einem auf einem Zugfahrzeug befindlichen Bremsventil (10) beaufschlagbar ist, mit einem Druckspeicher (27), der über eine Leitungsverbin-dung (33) mit dem Bremszylinder (28) und der Anhängerbremsleitung (13) verbunden ist, wobei mindestens ein erstes Magnetventil (36) zwischen den Bremszylinder (28) und den Druckspeicher (27) und ein zweites Magnetventil (37) zwischen den Bremszylinder und die Anhängerbremsleitung (33) geschaltet ist, von denen der Elektromagnet (53) des ersten Magnetventils über eine Elektrokupplung (16) und einen Schalter (23) mit einer auf dem Zugfahrzeug befindlichen Stromquelle verbindbar ist, während der Elektromagnet (59) des zweiten Magnetventils (37) über einen zusätzlichen Schalter (48), der abhängig vom Druck (49) im Druckspeicher (27) gesteuert wird, mit der Stromquelle verbindbar ist und bei der zum Zweck einer Druckentlastung mit Hilfe einer Handpumpe (42) über einen Kanal Druckmittel zum Druckspeicher hin befördert werden kann, sowie mit einem zwischen beiden Magnetventilen verlaufenden Leitungsabschnitt (38), von dem eine Zweigleitung zum Bremszylinder abzweigt (39), **dadurch gekennzeichnet, dass** die Saugseite (44) der Handpumpe (42) an den zwischen beiden Ventilen (36,37) verlaufenden Leitungsabschnitt (38) angeschlossen ist und dass dem zwischen Druckspeicher (27) und Bremszylinder (28) angeordneten ersten Magnetventil (36) eine Handnotbetätigungseinrichtung (55) zugeordnet ist.

2. Hydraulische Anhängerbremsanlage nach Anspruch 1, **dadurch gekennzeichnet, dass** die Handnotbetätigungseinrichtung (55) mit einem dritten Schalter (56) gekoppelt ist, der in den über den zweiten Schalter (48) und das zweite Magnetventil (37) geführten Stromkreis (64,66,67) geschaltet ist, um insbesondere diesen Stromkreis bei betätigter Handnotbetätigungseinrichtung (55) zu unterbrechen.

3. Hydraulische Anhängerbremsanlage nach Anspruch 1 oder 2, **dadurch gekennzeichnet, dass** die Anhängerbremsleitung (13) über eine parallel zum zweiten Magnetventil (37) geführte Bypass-Leitung (46) mit dem Bremszylinder (28) verbunden ist, wobei in die Bypass-Leitung (46) ein den Bremszylinder (28) absicherndes Rückschlagventil (47) geschaltet ist.

4. Hydraulische Anhängerbremsanlage nach einem der Ansprüche 1 bis 3, **dadurch gekennzeichnet, dass** sie zur Steuerung der hydraulischen Verbindungen zwischen dem Bremsventilanschluss (29), dem Zylinderanschluss (31) und dem Speicheranschluss (32) zwei Magnetventile (36,37) aufweist.

5. Hydraulische Anhängerbremsanlage nach einem der Ansprüche 1 bis 4, **dadurch gekennzeichnet, dass** das zwischen Druckspeicher (27) und Bremszylinder (28) angeordnete, erste Magnetventil (36) in einer federbelasteten Ausgangsstellung (52) einen Durchfluss freigibt, und in einer Arbeitsstellung (54) bei erregtem Elektromagneten (53) als Rückschlagventil arbeitet, das einen Druckmittelstrom vom Druckspeicher (27) zum Bremszylinder (28) verhindert.

6. Hydraulische Anhängerbremsanlage nach einem der Ansprüche 1 bis 5, **dadurch gekennzeichnet, dass** das zwischen Bremszylinder (28) und Anhängerbremsleitung (13) angeordnete, zweite Magnetventil (37) in einer federbelasteten Ausgangsstellung (58) als Rückschlagventil arbeitet, das einen Druckmittelstrom vom Bremszylinder (28) zur Anhängerbremsleitung (13) verhindert und das in einer Arbeitsstellung (61) bei erregtem Elektromagnet (59) einen Durchfluss freigibt.

7. Hydraulische Anhängerbremsanlage nach einem der Ansprüche 1 bis 6, **dadurch gekennzeichnet, dass** der Handpumpe (42) auf deren Druckseite (45) ein den Druckspeicher (27) absicherndes Rückschlagventil (43) zugeordnet ist.

8. Hydraulische Anhängerbremsanlage nach einem der Ansprüche 1 bis 7, **dadurch gekennzeichnet, dass** in die Leitung (35) zwischen Druckspeicher (27) und erstes Magnetventil (36) ein drittes Magnetventil (81) geschaltet ist, das mit seinem Elektromagneten (84) in den vom druckabhängigen, zweiten Schalter (48) gesteuerten Stromkreis geschaltet ist.

9. Hydraulische Anhängerbremsanlage nach Anspruch 8, **dadurch gekennzeichnet, dass** dem dritten Magnetventil (81) eine das Laden des Speichers begrenzende Drossel (86) parallel geschaltet ist.

10. Hydraulische Anhängerbremsanlage nach einem der Ansprüche 1-9, **dadurch gekennzeichnet, dass** die Magnetventile (36,37) als Patronenventile ausgebildet und in ein Gehäuse (71) eingebaut sind, wobei die Handnotbetätigungseinrichtung (55) an dem aus dem Gehäuse (71) herausragenden Elektromagnet (53) des ersten Magnetventils (36) angeordnet ist.

11. Hydraulische Anhängerbremsanlage nach Anspruch 10, **dadurch gekennzeichnet, dass** der dritte Schalter (56) in die Handnotbetätigungseinrichtung (55) integriert ist.

## Claims

1. Hydraulic trailer brake system in which a brake valve (10) which is located on a traction vehicle can act on at least one brake cylinder (28) via a trailer brake line (13), having a pressure accumulator (27) which is connected to the brake cylinder (28) and to the trailer brake line (13) via a line (33), wherein at least a first solenoid valve (36) is connected between the brake cylinder (28) and the pressure accumulator (27), and a second solenoid valve (37) is connected between the brake cylinder and the trailer brake line (33), in which the electromagnet (53) of the first solenoid valve can be connected via an electrical coupling (16) and a switch (23) to a power source which is located on the traction vehicle, while the electromagnet (59) of the second solenoid valve (37) can be connected to the power source via an additional switch (48) which is controlled as a function of the pressure (49) in the pressure accumulator (27), and in which, for the purpose of pressure relief, pressure medium can be fed to the pressure accumulator using a hand pump (42) via a duct, and having a line section (38) which runs between the two solenoid valves and from which a branch line branches (39) to the brake cylinder, **characterized in that** the suction side (44) of the hand pump (42) is connected to the line section (38) which runs between the two valves (36, 37), and **in that** an emergency manual activation device (55) is assigned to the first solenoid valve (36) which is arranged between the pressure accumulator (27) and brake cylinder (28).

2. Hydraulic trailer brake system according to Claim 1, **characterized in that** the emergency manual activation device (55) is coupled to a third switch (56) which is connected into the circuit (64, 66, 67) which leads via the second switch (48) and the second solenoid valve (37) in order to interrupt, in particular, this circuit when the emergency manual activation device (55) is activated.

3. Hydraulic trailer brake system according to Claim 1 or 2, **characterized in that** the trailer brake line (13) is connected to the brake cylinder (28) via a bypass line (46) which is led in parallel with the second solenoid valve (37), a non-return valve (47) which protects the brake cylinder (28) being connected into the bypass line (46).

4. Hydraulic trailer brake system according to one of Claims 1 to 3, **characterized in that** it has two solenoid valves (36, 37) for controlling the hydraulic connections between the brake valve port (29), the cylinder port (31) and the accumulator port (32).

5. Hydraulic trailer brake system according to one of Claims 1 to 4, **characterized in that** the first solenoid valve (36) which is arranged between the pressure accumulator (27) and brake cylinder (28) clears a passage in a spring-loaded home position (52), and in a working position (54) operates as a non-return valve when the electromagnet (53) is excited, said non-return valve preventing pressure medium from flowing from the pressure accumulator (27) to the brake cylinder (28).

6. Hydraulic trailer brake system according to one of Claims 1 to 5, **characterized in that** the second solenoid valve (37) which is arranged between the brake cylinder (28) and trailer brake line (13) operates as a non-return valve in a spring-loaded home position (58), said non-return valve preventing pressure medium from flowing from the brake cylinder (28) to the trailer brake line (13) and clearing a passage in a working position (61) when the electromagnet (59) is excited.

7. Hydraulic trailer brake system according to one of Claims 1 to 6, **characterized in that** a non-return valve (43) which protects the pressure accumulator (27) is assigned to the hand pump (42) on its pressure side (45).

8. Hydraulic trailer brake system according to one of Claims 1 to 7, **characterized in that** a third solenoid valve (81) which is connected with its electromagnet (84) into the circuit controlled by the pressure-dependent, second switch (48) is connected into the line (35) between the pressure accumulator (27) and first solenoid valve (36).

9. Hydraulic trailer brake system according to Claim 8, **characterized in that** a throttle (86) which limits the charging of the accumulator is connected in parallel with the third solenoid valve (81).

10. Hydraulic trailer brake system according to one of Claims 1 to 9, **characterized in that** the solenoid valves (36, 37) are embodied as cartridge valves and are installed in a housing (71), with the emergency manual activation device (55) being arranged on the electromagnet (53), projecting out of the housing (71), of the first solenoid valve (36).

11. Hydraulic trailer brake system according to Claim 10, **characterized in that** the third switch (56) is integrated into the emergency manual activation device (55).

## Revendications

1. Système de freinage hydraulique pour remorque, dans lequel au moins un cylindre de frein (28) peut être sollicité par l'intermédiaire d'une conduite de frein de remorque (13) par une soupape de freinage (10) située sur un véhicule tracteur, comprenant un accumulateur de pression (27) relié par une tuyauterie de jonction (33) au cylindre de frein (28) et à la conduite de frein de remorque (13), au moins une première électrovanne (36) étant montée entre le cylindre de frein (28) et l'accumulateur de pression (27) et une deuxième électrovanne (37) entre le cylindre de frein (28) et la conduite de frein de remorque (33), dont l'électroaimant (53) de la première électrovanne peut être relié par un couplage électrique (16) et un commutateur (23) à une source de courant située sur le véhicule tracteur, tandis que l'électroaimant (59) de la deuxième électrovanne (37) peut être relié à la source de courant par un commutateur (48) supplémentaire, commandé indépendamment de la pression (49) dans l'accumulateur de pression (27), et dans lequel un moyen de pression peut être amené vers l'accumulateur de pression (27) à l'aide d'une pompe à main (42) par l'intermédiaire d'un canal pour provoquer une décompression, et comprenant un segment de conduite (38) s'étendant entre les deux électrovannes et duquel est dérivé un branchement vers le cylindre de frein (28),
**caractérisé en ce que**
le côté aspiration (44) de la pompe à main (42) est raccordé au segment de conduite (38) s'étendant entre les deux électrovannes (36, 37), et un dispositif d'actionnement manuel de secours (55) est associé à la première électrovanne (36) disposée entre l'accumulateur de pression (27) et le cylindre de frein (28).

2. Système de freinage hydraulique pour remorque selon la revendication 1,
**caractérisé en ce que**
le dispositif d'actionnement manuel de secours (55) est couplé à un troisième commutateur (56), monté dans le circuit électrique (64, 66, 67) passant par le deuxième commutateur (48) et la deuxième électrovanne (37), notamment pour couper ce circuit électrique lorsque le dispositif d'actionnement manuel de secours (55) est activé.

3. Système de freinage hydraulique pour remorque selon la revendication 1 ou 2,
**caractérisé en ce que**
la conduite de frein de remorque (13) est reliée au cylindre de frein (28) par une conduite de dérivation (46) parallèle à la deuxième électrovanne (37), un clapet anti-retour (47) étant monté dans la conduite de dérivation (46) pour protéger le cylindre de frein (28).

4. Système de freinage hydraulique pour remorque selon l'une quelconque des revendications 1 à 3,
**caractérisé en ce qu'**
il présente deux électrovannes (36, 37) pour commander les liaisons hydrauliques entre le raccord de soupape de freinage (29), le raccord de cylindre (31) et le raccord d'accumulateur (32).

5. Système de freinage hydraulique pour remorque selon l'une quelconque des revendications 1 à 4,
**caractérisé en ce que**
la première électrovanne (36) disposée entre l'accumulateur de pression (27) et le cylindre de frein (28), dans une position initiale (52) sollicitée par ressort, laisse un passage de flux, et dans une position de travail (54), lorsque l'électroaimant (53) est excité, fonctionne comme un clapet anti-retour qui empêche un flux de moyen de pression de l'accumulateur de pression (27) de se diriger vers le cylindre de frein (28).

6. Système de freinage hydraulique pour remorque selon l'une quelconque des revendications 1 à 5,
**caractérisé en ce que**
la deuxième électrovanne (37) disposée entre le cylindre de frein (28) et la conduite de frein de remorque (13), dans une position initiale (58) sollicitée par ressort, fonctionne comme un clapet anti-retour qui empêche un flux de moyen de pression du cylindre de frein (28) de se diriger vers la conduite de frein de remorque (13) et, en position de travail (61), laisse un passage de flux lorsque l'électroaimant (59) est excité.

7. Système de freinage hydraulique pour remorque selon l'une quelconque des revendications 1 à 6,
**caractérisé en ce qu'**
un clapet anti-retour (43), qui protège l'accumulateur de pression (27), est associé à la pompe à main (42) côté refoulement (45) de celle-ci.

8. Système de freinage hydraulique pour remorque selon l'une quelconque des revendications 1 à 7,
**caractérisé en ce que**
dans la conduite (35) entre l'accumulateur de pression (27) et la première électrovanne (36) une troisième électrovanne (81) est montée, par son électroaimant (84) dans le circuit électrique commandé par le deuxième commutateur (48) dépendant de la pression.

9. Système de freinage hydraulique pour remorque selon la revendication 8,
**caractérisé en ce qu'**
un étrangleur (86) limitant le chargement de l'accumulateur est monté parallèlement à la troisième électrovanne (81).

10. Système de freinage hydraulique pour remorque selon l'une quelconque des revendications 1 à 9,
**caractérisé en ce que**
les électrovannes (36, 37) présentent la forme de vannes à cartouche et sont montées dans un boîtier (71), le dispositif d'actionnement manuel de secours (55) étant disposé sur l'électroaimant (53) de la première électrovanne (36) saillant du boîtier (71)

11. Système de freinage hydraulique pour remorque selon la revendication 10,
**caractérisé en ce que**
le troisième commutateur (56) est intégré dans le dispositif d'actionnement manuel de secours (55).
